# EUROPÄISCHE PATENTSCHRIFT

(11) **EP 0 680 600 B1**
(45) Veröffentlichungstag und Bekanntmachung des Hinweises auf die Patenterteilung: **27.01.1999**
(21) Anmeldenummer: 95901396.2
(22) Anmeldetag: 18.11.1994
(51) Int. Cl.: G01D 5/14, G01B 7/30

(54) **VERSTELLVORRICHTUNG**
ADJUSTING DEVICE
SYSTEME DE REGLAGE

(30) Priorität: 20.11.1993 DE 9317797 U; 23.04.1994 DE 9406832 U; 23.04.1994 DE 9406788 U; 13.05.1994 DE 9407986 U; 24.05.1994 DE 9408516 U; 29.06.1994 DE 9410490 U
(43) Veröffentlichungstag der Anmeldung: 08.11.1995
(73) Patentinhaber: AB Elektronik GmbH, D-59368 Werne (DE)
(72) Erfinder: APEL, Peter, D-59394 Südkirchen (DE); HAUSCHOPP, Marion, D-59368 Werne (DE); WILCZEK, Klaus, D-59368 Werne (DE)
(74) Vertreter: Hoffmeister, Helmut, Dr. Dipl.-Phys.
(86) Internationale Anmeldenummer: EP9403825
(87) Internationale Veröffentlichungsnummer: WO9514911

(56) Entgegenhaltungen:
- EP-A- 0 665 416
- WO-A-92/10722
- US-A- 5 148 106
- PATENT ABSTRACTS OF JAPAN vol. 15 no. 35 (M-1074) ,28.Januar 1991 & JP,A,02 275030 (MITSUBISHI ELECTRIC CORP.) 9.November 1990,

## Beschreibung

Die Erfindung betrifft eine Verstellvorrichtung.

Aus der WO 92 10 722 ist ein magnetischer Meßfühler bekannt. Er besteht aus einem Magnet, den eine rotierende Welle umgibt und einem Stator, der gegenüber dem Magnet angeordnet ist. Der Stator ist mit einer Halterung an einem Gehäuse befestigt. In einer Ausnehmung des Stators sind sich gegenüberliegend eine Hallsonde und eine Erregerspule angeordnet.

Dieser Meßfühler hat sich bewährt, bedarf aber für den Einsatz in Kraftfahrzeugen einer Weiterentwicklung.

Aus der DE 40 21 691 A1 ist eine Drosselklappenanordnung bekannt. Sie besteht aus einem Gehäuse, in dem eine Drosselklappe mit einer Drosselklappenwelle angeordnet ist. An der Drosselklappenwelle ist ein Potentiometer und ein Getriebe befestigt. Mit dem Getriebe ist ein Elektromotor antriebsverbunden. Eine Regeleinrichtung hat die Aufgabe, alle eingegebenen Signale, z. B. eine Motordrehzahl, mittels des Potentiometers zu erfassen und zu vergleichen und die Drosselklappenverstellung durch eine entsprechende Ansteuerung des Elektromotors vorzunehmen.

Nachteilig ist, daß die mechanischen und ansteuernden Teile in einem Gehäuse untergebracht sind. Kommt es zu einem Defekt an den ansteuernden und verstellenden Teil, muß die gesamte Drosselklappenanordnung ausgebaut und durch eine neue ersetzt werden. Eine Reparatur defekter Teile ist so kostenaufwendig, daß die gesamte Drosselklappenanordnung nicht mehr verwendbar ist und verschrottet werden muß. Ein weiterer Nachteil ist, daß die Meßgenauigkeit des Potentiometers nicht hoch genug ist.

EP-A-0 665 416, das ein Stand der Technik gemäss Artikel 54 (3) EPÜ darstellt, beschreibt eine Verstellvorrichtung mit einem Wellenelement, das in einem Gehäuse einer Einheit verstellbar angeordnet ist, und einem Drehwinkelsensor. Der Drehwinkelsensor besteht aus einer stationären Formation, die ein Statorelement bestehend aus zwei abgerundeten, halbmondförmigen Teilelementen enthält, die mit einer Verspanneinheit gehalten und in einer Halterung so angeordnet sind, dass sich zwischen den Teilelementen eine Abstandsausnehmung befindet. Weiter enthält der Drehwinkelsensor eine rotierende, gegenüber der stationären Formation bewegbare Formation. Diese ist als ringförmiges Magnetelement ausgebildet, das von einer Magnethalterung, die mit dem Wellenelement verbunden ist, so gehlaten wird, dass sich das Magnetelement unter Belassung eines Luftspaltes um die Statorteilelemente bewegen lässt.

Aufgabe der Erfindung ist demnach, eine Verstellvorrichtung, die mit einem Drehwinkelsensor nach dem magnetischen Prinzip arbeitet, so weiter zu bilden, daß sie für einen Einsatz in Kraftfahrzeugen geeignet ist, eine hohe Meßgenauigkeit ermöglicht und sich einfach und kostengünstig herstellen läßt.

Erfindungsgemäß wird die Aufgabe durch die Merkmale des Anspruches 1 gelöst.

Die mit der Erfindung erzielten Vorteile bestehen insbesondere darin, daß das Magnetelement über die Magnethalterungseinheit direkt am Wellenelement und des Statorelements mit den magnetoelektrischen Bauteilen durch das Statorhalterungselement direkt am Gehäuseelement der Einheit o.dgl. angeordnet werden können. Hierdurch ist es möglich, diese Teile unabhängig von der Drosselklappeneinheit zu fertigen. Das erbringt den großen Vorteil, daß die den Drehwinkelsensor ausmachenden Teile an Einheiten unterschiedlicher Ausbildung angebracht werden können. Darüberhinaus ist die Wartung, Reperatur u.dgl. wesentlich preisgünstiger und schneller durchzuführen.

Ein weiterer sehr wesentlicher Vorteil besteht darin, daß durch die Verspanneinheit es möglich ist, daß Statorelement im Statorhaltungselement so anzubringen, daß keine zusätzlichen Verschraubungen o. dgl. erforderlich sind.

Durch die Verspanneinheit ist gewährleistet, daß das Statorelement präzise im Statorhaltungselement arretiert wird. Ein spezielles Justieren gegenüber den Teilen der rotierenden Einheit ist nicht erforderlich. Außerdem läßt die Verspanneinheit ein Schwingen bzw. Verrutschen des Statorelements nicht zu, so daß das auf einfache Art und Weise gehaltene Statorelement genaue und wiederholbare Meßergebnisse ermöglicht.

Ein weiterer Vorteil besteht darin, daß die Statorteilelemente mit mit wenigstens einer um etwa 45° geneigten Fase versehen sind. Die Fasen beeinflussen den magnetischen Fluß derart, daß sich die Meßgenauigkeit des Drehwinkelsensors erhöht.

Vorteilhaft ist es, wenn die Statorteilelemente mit wenigstens einer Stiftausnehmung versehen sind. Die Statorteilelemente können dabei in Form von Blechpaketen aufgebaut sein. Jedes Blechpaket besteht aus einzelnen speziell zu behandelten Blechen, sogenannten Texturblechen, die übereinandergeschichtet jeweils ein Statorelement ausbilden. Durch diese besondere Gestaltung der einzelnen Statorteilelemente wird gesichert, daß insbesondere Magnetisierungsverluste im Statorelement zu keiner Verfälschung der Meßwerte führen.

Vorteilhaft ist es, wenn die Verspanneinheit aus einer im wesentlichen kreisförmigen Verspannplatte und wenigstens einem Verspannungsstiftelement je Statorelement besteht. Dabei liegt die Verspannplatte auf dem Statorelement auf und ist mit den durch die Stiftausnehmungen der Statorteilelemente hindurchgehenden Verspannungsstiftelemente an einem Bodenteil des Statorhaltungselements fest gehalten. Durch diese Art der Verspannung werden die Blechpakete der beiden Statorteilelemente in ihrer geschichteten Form positioniert, gehalten un mit dem Bodenteil des Statorhaltungselementes verbunden. Die Verspannungsstifte übernehmen dabei zwei Funktionen. Zum einen sorgen die dafür, daß die einzeln Bleche der Statorhaltungselemente nicht seitlich verrutschen können. Zum anderen sichern sie, daß die Bleche in Form eines Blechpaketes fest zusammengehalten werden, so daß es zu keinem Schwingen der Statorhaltungselemente kommen kann.

Erreicht wird das insbesondere dadurch, daß die Verspannplatte und die Verspannungsstiftelemente mit ihrer Verbindung am Bodenteil aus einem thermoplastischen Kunststoff hergestellt sind. Vorzugsweise wird der Kunststoff gespritzt. Ausgenutzt werden dabei die Eigenschaften der Verformbarkeit, der Elastitizät und der Dauerbeständigkeit des Kunststoffes. Kommt es zu besonderen Belastungen, z.B. Stoßbelastungen, Temperatur-, Feuchtigkeits- und anderen Belastungen, haben diese keinen Einfluß auf die Verspann- und Haltewirkungen der Verspanneinrichtung.

Vorteilhaft ist es, wenn in der Abstandsausnehmung zwischen den Statorteilelementen ein magnetoelektrisches Bauteil, z.B. ein Hall-Element, angeordnet ist. Durch diese Form der Anordnung wird das Erzielen genauester Meßergebnis erreicht. Die Meßergebnisse sind darüber hinaus deshalb genau, weil das Statorelement aus zwei apfelsinenscheibenförmig ausgebildeten Teilelementne mit einer dazwischenliegenden Abstandsausnehmung besteht, die ein lineares Verhalten des magnetischen Flusses bewirken. Damit das Hall-Elemente schwingungssicher gehalten werden kann, wird in die Abstandsausnehmung vorzugsweise Vergußmasse eingebracht. Selbstverständlich ist es auch möglich, die Abstandsausnehmung mit anderen Materialen auszufüllen, die gleiche oder ähnliche Eigenschaften haben.
Die Magnethalterungseinheit besteht vorteilhafterweise aus einem hohlzylinderförmig ausgebildeten Magnethalterungselement und einem mit dem Wellenelement verbundenen Distanzscheibenelement, das in das Magnethalterungselement einführbar und in ihm festsetzbar ist. Damit bilden das Magnethalterungselement, das Distanzscheibenelement und das Magentelement einen mit dem Wellenelement verbundenen Rotor, der sich im Inneren des Statorhalterungselements geschützt und frei bewegen kann.

Vorteilhaft ist es, wenn das ringförmige Magnetelement hohlzylinderförmig ausgebildet ist und in das Magnethalterungselement einführbar und in ihm festsetzbar ist. Durch diese Ausbildung ist die Möglichkeit gegeben, die rotierenden Teile des Drehwinkelsensors zusammensteckbar und leicht montierbar auszubilden. Das Magnetelement kann ein Dauermagnet sein. Hierbei können die allgemein bekannten Werkstoffe für Dauermagneten eingesetzt werden. Selbstverständlich ist es möglich, daß anstelle eines Dauermagnets ein Elektromagnet verwendet werden kann.

Vorteilhaft ist es,
- daß ein Drosselklappenelement und ein als Wellenelement ausgebildetes Drosselklappenwellenelement von einem Drosselklappengehäuseelement als dem ersten Teilgehäuse umgeben sind, aus dem das Drosselklappenwellenelement herausragt,
- daß die zu dem Drehwinkelsensor gehörenden Teile Statorlement, gehalten in dem Statorhalterungselement, ringförmig ausgebildetes Magnetelement gehalten von dem Magnethalterungselement und dem mit ihm verbundenen Distanzscheibenelement, eine Getriebeeinheit, eine Schaltungseinheit und eine Motoreinheit in wenigstens einem weiteren Teilgehäuse untergebracht sind und
- daß bei aufgesetztem zweiten Teilgehäuse, welches wenigstens den Drehwinkelsensor und die Getriebeeinheit umfaßt, auf das Drosselklappengehäuseelement das aus ihm herausragende Drosselklappenwellenelement in die Getriebeeinheit und das Distanzscheibenelement des Drehwinkelsensors eingreift und eine kraftschlüssige Verbindung herstellbar ist.

Unter Verstellvorrichtung wird im folgenden nicht nur eine Drosselklappeneinheit mit Drehwinkelsensor sondern auch eine Gaspedaleinheit mit Drehwinkelsensor oder eine sonstige Einrichtung verstanden, bei dem das Wellenelement verstellt wird und die Verstellung durch den eingebauten Drehwinkelsensor feststellbar ist.

Hierdurch wird erreicht, daß durch eine getrennte Unterbringung der wesentlichen Einheiten einer Drosselklappenanordnung in verschiedenen Gehäusen eine getrennte Fertigung möglich ist. Darüber hinaus können sämtliche Drosselklappeneinheiten mit nur wenigen Grundlösungen der verstellbaren Einheiten versehen werden. Wesentlich ist, daß es hierdurch möglich ist, Drosselklappeneinheiten verschiedener Hersteller bei einer Neumontage oder einer Reparatur mit den Stellgliedern zu versehen. Defekte Stellglieder können für eine Reparatur mit einigen wenigen Griffen durch neue ersetzt werden, ohne daß dabei die gesamte Drosselklappenanordnung ausgebaut und gegebenenfalls einer Verschrottung zugeführt werden muß. Insbesondere die als Steckverbindung ausgebildete kraftschlüssige Verbindung zwischen Drosselklappenwelle und Winkelgebereinrichtung und Getriebeeinheit ermöglichen ein schnelles Lösen bzw. kraftschlüssiges Verbinden dieser Elemente.

Vorteilhaft ist es, wenn der Drehwinkelsensor, die Getriebeeinheit, die Schaltungseinheit und die Motoreinheit zu einer Drosselklappenstelleinrichtung zusammengefaßt sind, die von einem Aktuatorgehäuse als dem zweiten Teilgehäuse umgeben ist. Bei dieser Ausbildungsform sind die elektrischen und die mechanischen Stellglieder von einem einzigen Gehäuse umgeben. Bei einem Zusammenstecken des Drosselklappengehäuses mit dem Aktuatorgehäuse kommt es hierbei zum einen zu der bereits beschriebenen kraftschlüssigen Verbindung zwischen der Drosselklappenwelle und der Winkelgebereinheit und der Getriebeeinheit und auf der anderen Seite zu einer ansteuernden Verbindung. Die Getriebeeinheit kann von einem Getriebegehäuseelement umgeben sein.

Vorteilhaft ist es, wenn der Drehwinkelsensor, die Getriebeeinheit und die Motoreinheit von einem Stelleinrichtungsgehäuse als dem zweiten und die Elektronikeinheit von einem Elektronikgehäuse als dem dritten Teilgehäuse umgeben ist. Hierbei wird eine Trennung vorgenommen in den rein steuernden und den im wesentlichen stellenden Teil der Drosselklappenstelleinrichtung. Durch die Abtrennung der Schaltungseinheit und ihr Unterbringen in einem separaten Elektronikgehäuse ist es möglich, dieses dritte Teilgehäuse an den unterschiedlichsten Stellen innerhalb des Fahrzeuges unterzubringen. Selbstverständlich ist es auch möglich, alle drei Einheiten übereinander anzuordnen. Die Dreiteilung des Gehäuses gibt in diesem Fall den besonderen Vorteil, daß große Variations- und Anpassungsmöglichkeiten an jeweilige Einsatz- und Verwendungsfälle möglich sind.

Vorteilhaft ist es, wenn das Drosselklappengehäuse und das Aktuatorgehäuse oder das Drosselklappengehäuse und das Stelleinrichtungsgehäuse und gegebenenfalls das Elektronikgehäuse durch Steck- und/oder Klemmittel miteinander verbunden sind. Unter Steckmittel werden dabei solche Verbindungsmittel verstanden, wie sie z. B. bei Schukosteckern, Elektroniksteckern oder dergleichen zum Einsatz kommen. Unter Klemmittel werden im wesentlichen speziell gekrümmte Federn, die in einen Vorsprung oder eine Ausnehmung einrasten oder dergleichen verstanden. Durch diese Steck- und/oder Klemmittel ist es möglich, die drei Teilgehäuse Lage- und paßgerecht miteinander zu verbinden und ebenso wieder sehr leicht voneinander zu trennen. Damit wird insbesondere eine sehr leichte Montage bzw. Demontage gesichert.

Das Drosselklappengehäuse kann aus Gußmaterial, insbesondere Leichtmetallguß, bestehen.

Vorteilhaft ist es, wenn das Statorhalterungselement als an einer Seite offener Hohlzylinder ausgebildet ist, der an der offenen Seite mit seiner Zylinderwand mit dem Gehäuseelement verbunden ist. Hierdurch übernimmt das Statorhalterungselement nicht nur die Funktion der Halterung des Statorelements, sondern ist darüber hinaus äußeres Schutzelement des gesamten Drehwinkelsensors. Durch die unmittelbare Verbindung mit dem Gehäuseelement ist es so möglich, den gesamten Drehwinkelsensor abdichtend zu kapseln, so daß Schmutz, Öl, Staub und dergleichen die Funktion des Drehwinkelsensors nicht beeinflussen können.

Die Schaltungseinheit kann in der Zentralausnehmung, die im Gehäuseelement angeordnet ist, untergebracht sein. Hierdurch wird das eletrische Bauteil sowohl vor mechanischen als auch vor Umwelteinflüssen wie Staub und Öl geschützt. Die Schaltungseinheit kann auch eine Steckplatte sein, in die das Statorhalterungselement des Drehwinkelsensors einsteckbar ist.

In weiterer Ausgestaltung sind das Gefäßelement unter Einbringung der Zentralausnehmung, das Aktuator-Gehäuseelement, das Stelleinrichtungsgehäuseelement und das Elektronik-Gehäuseelement aus einem formbaren Material, z.B. Kunststoff, insbesondere hochfestem Kunststoff und/oder einem elektrisch leitfähigen thermoplastischen Kunststoff hergestellt. Die Auswahl hängt von dem jeweiligen Einsatzfall ab.

Vorteilhaft ist es, wenn das Gehäuseelement, das Aktuatorgehäuseelement, das Stelleinrichtungselement und das Elektronikgehäuseelement aus einem elektrisch leitfähigen Thermoplast mit Stahlfilamenten unter Integration von elektrischen und mechanischen Durchführungs- und Halterungsöffnungen funktionsgerecht geformt ist. Es entstehen Gehäuseelemente, die sich einfach und vor allem funktionsgerecht wie ein Kunststoffgehäuse formen lassen, dabei aber die Eigenschaften eines wesentlich komplizierter herzustellenden Metallgehäuses aufweist. Durch das elektrisch leitfähige Thermoplast ist es möglich, jede Formgebung auf genaueste Art und Weise zu berücksichtigen. Ausbuchtungen, Durchführungs- und Halterungsöffnungen lassen sich ohne gußtechnische Schwierigkeiten berücksichtigen.

Vorteilhaft ist es, wenn das elektrisch leitfähige Thermoplast ein elektrisch leitfähiges Langfasergranulat mit einem Stahlfaseranteil von 1 bis 10 Gew.-% ist. Hierdurch wird ein Durchgangswiderstand von 10 bis 100 Ohm·cm erreicht, der eine Abschirmung zwischen 55 und 70 dB ermöglicht. Hierbei kann ein Langfasergranulat bis zu 60 Gewichtsprozent mit Faserlängen entsprechend der Schnittlänge der extrudierten Stränge, z. B. 10 mm eingesetzt werden. Zum Vergleich: traditionelle Kurzfasercompounds verfügen nur über eine Faserlänge von 0,3 mm. Durch diese extreme Faserlänge erlangt das elektrisch leitfähige Thermoplast besonders hohe Steifigkeits- und Zähigkeitseigenschaften. So wird z. B. eine Zugfestigkeit von 43,47 bis 79,35 N/mm² bzw. ein Zug-E-Modul von 1380 bis 4830 N/mm² erreicht. Die Biegefestigkeit erreicht Werte von 42,78 bis 122,82 N/mm² bei einem Biege-E-Modul von 1380 bis 4140 N/mm². Die Schlagfähigkeit IZOD beträgt 10,4 bis 62,4 J/m. Wählbar ist dabei zwischen 10 Produkten elektrisch leitfähiger Langfasergranulate.

Elektrische Durchführungsöffnungen sind mit einem elektrisch isolierendem Kunststoff umgeben. Weiterhin ist es vorteilhaft, die elektrisch aktive Einheit in dem isolierenden Kunststoff zu halten. Hierdurch wird erreicht, daß die Gehäuseeinheit funktionsgerecht ausgebildet wird. Dabei ist es möglich, meßtechnisch notwendige Öffnungen ebenfalls mit einem Kunststoff zu umgeben. Selbstverständlich ist es auch möglich, an Stelle von Kunststoff andere Isolierstoffe einzusetzen.

Anschlußleisten, z. B. ein Steckerelement, ein Masseanschluß oder dgl. können in die Gehäuseelemente eingespritzt sein. Hierdurch wird gewährleistet, daß durch das Steckerelement bzw. den speziellen Masseanschluß die Gehäuseeinheit auf ein gewünschtes Potentialniveau angehoben werden kann. Durch das Herstellen eines einheitlichen Potentialniveaus werden Entladungen.

Die Erfindung wird nachstehend anhand der Zeichnung näher erläutert.

Es zeigen:
- Fig. 1: eine Drosselklappeneinheit und einen mit ihr verbundenen Drehwinkelsensor in einer schematischen teilweise geschnittenen Darstellung,
- Fig.2: eine stationäre Einheit eines Drehwinkelsensors gemäß Fig. 1 in einer schematischen Hinteransicht,
- Fig.3: eine stationäre Einheit eines Drehwinkelsensors gemäß Fig. 1 in einer schematischen Schnittdarstellung
- Fig. 4: eine stationäre Einheit eines Drehwinkelsensors gemäß Fig. 1 in einer schematischen Draufsicht
- Fig. 5: eine rotierende Einheit eines Drehwinkelsensors gemäß Figur 1 von der stationären Formation her gesehen in einer schematischen Draufsicht,
- Fig. 6: eine Drosselklappeneinheit gemäß Figur 1 mit einer Schaltungseinheit, die im Drehwinkelsensor angeordnet ist in einer schematischen, teilweise geschnittenen Darstellung,
- Fig. 7: eine weitere Drosselklappenvorrichtung mit einem zweiteilig angeordneten Gehäuseelement in einer schematischen Darstellung und
- Fig. 8: eine mehrteilige Ausführungsform einer mehrteiligen Drosselklappenvorrichtung gemäß Figur 7 in einer schematischen Darstellung.

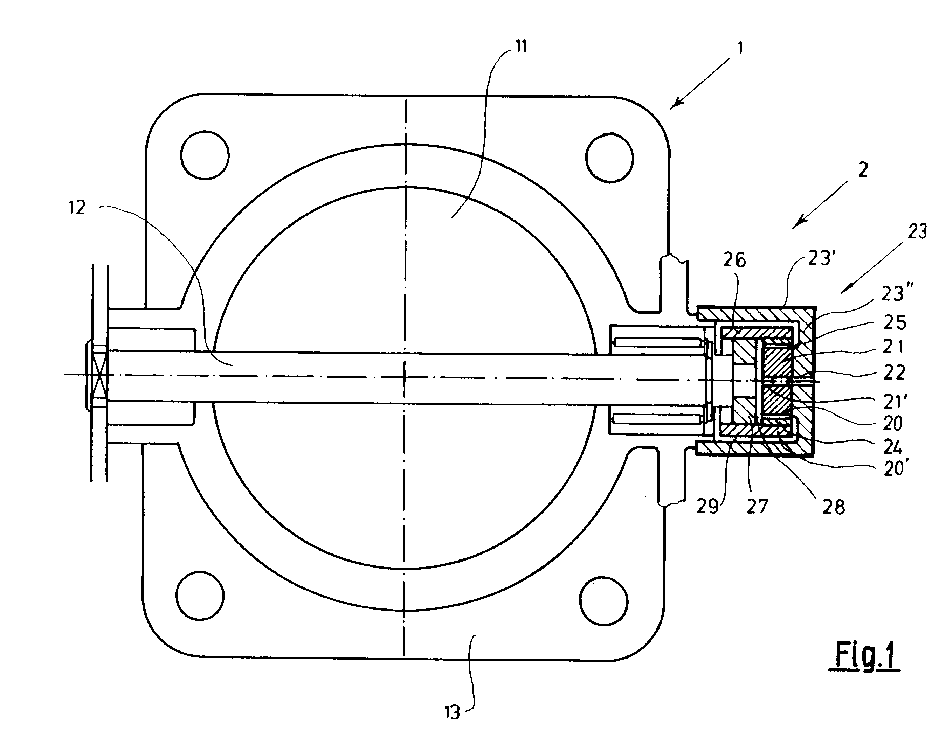

In Fig. 1 ist eine Drosselklappeneinheit 1 und ein mit ihr verbundener Drehwinkelsensor 2 dargestellt.

Die Drosselklappeneinheit besteht aus einer Drosselklappe 11, die mit einem Drosselklappenwellenelement 12 verbunden in einem Drosselklappen-Gehäuseelement 13 gelagert ist.

Der Drehwinkelsensor 2 besteht aus
- einer stationären Einheit 20 und
- einer rotierenden Einheit 20'.

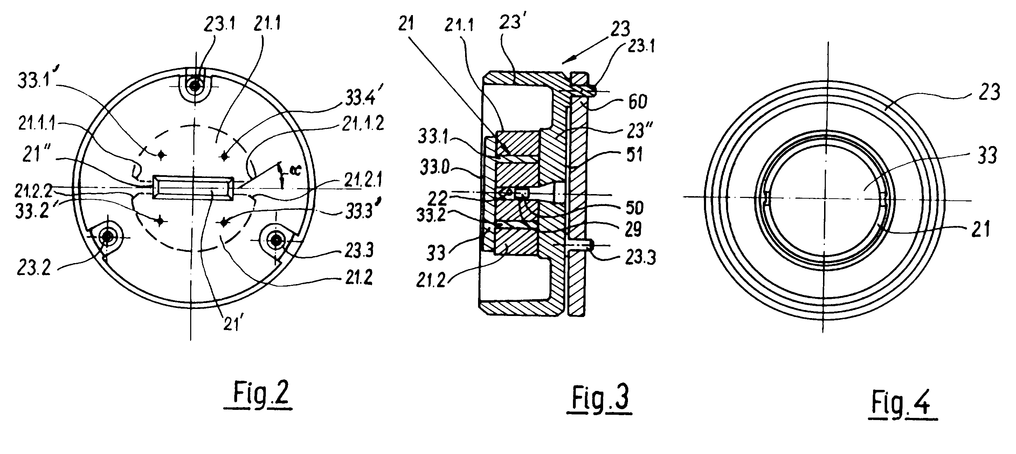

Die stationäre Einheit 20 ist im Detail darüber hinaus in den Figuren 2, 3 und 4 dargestellt. Wesentlich ist dabei, daß zur Erreichung eines linearen Verhaltens des magnetischen Flusses ein Statorelement 21 aus zwei abgerundet halbmondförmig ausgebildeten Statorteilelementen 21.1 und 21.2 besteht, die sich einander gegenüberliegen, die an den Ecken Fasen (21.1.1, 21.1.2, 21.2.1 bzw. 21.2.2) aufweisen und zwischen denen sich eine Abstandsausnehmung 21" befindet. Die Fasen (21.1.1, 21.1.2, 21.2.1 bzw. 21.2.2) sind einem Winkel a von etwa 45° angebracht. Hier erhalten die Statorteilelemente 21.1 bzw. 21.2 von oben gesehen die Form einer Apfelsinenscheibe bzw. insbesondere durch die Fasen, die einer Mandarinenscheibe. Jedes der Statorteilelemente 21.1 und 21.2 ist aus einzelen Blechen, die übereinandergestapelt sind, aufgebaut. Als Bleche kommen insbesondere Texturbleche zum Einsatz.

Die Magnetisierbarkeit wird durch kristallenergetischen Richtkräfte beeinflußt. Weiche Magnetwerkstoffe zeigen eine kleine Kristallanisotropie, die sich bei Ausrichtung der willkürlich orientierten Kristalle durch äußere Beeinflussung (z. B. durch Walzen) noch herabsetzen läßt. Fällt die Richtung des äußeren Feldes in die Richtung leichtester Magnetisierbarkeit, so erreicht die Remanenz fast den Sättigungswert. Die einzelen magnetischen Momente der WeiBschen Bezirke sind bereits ausgerichtet und brauchen nicht mehr gedreht werden. Koerzitivfeldstärke und Anfangspermeabilität sind strukturempfindliche Zustandsgrößen, die sich schon durch geringere Veränderungen der chemischen Zusammensetzung oder auch durch Wärmebehandlungen und mechanische Deformationen erheblich ändern. Mechanische Spannungen innerhalb des Materials setzen die Wandbeweglichkeit der WeiBschen Bezirke herab. Diese Spannungen können auftreten:
a) durch Druck oder Zug während der magnetischen Erregung,
b) durch plastische Deformation bei der Umformung oder der thermischen Behandlung,
c) durch magnetostriktive Spannungen.
Grundsätzlich wird durch Steigerung des Permeabilitätswertes die Empfindlichkeit gegen mechanische Spannungen vergrößert. Deshalb sind sämtliche mechanischen Verformungen, die zu Gefügeänderungen und mechanischen Spannungen führen, zu vermeiden. Weil bei dickeren Blechen leichter bleibende Deformationen auftreten, sind sie empfindlicher als dünne. Die durch das Zusammenpressen geschichteter Kerne bedingte Erhöhung der Verluste kann z. B. bei Pressdrücken von etwa 15 kp/cm² bereits 10 % ausmachen. Die besseren magnetischen Eigenschaften haben kalt gewalzte Bleche in Walzrichtung. Sie sind durch besondere kristallographische Anordnungen des Gefüges begründet (Textur). Bei Eisen- und Eisen-Silicium-Legierungen sind z. B. die Würfelkanten in der [100]-Richtung des kubisch-raumzentrierten Gitters leichter magnetisierbar als die Richtungen der Flächen- oder Raumdiagonalen (Würfelkantentextur). Eine Legierung mit 50 % Ni und 50 % Fe ist am leichtesten magnetisch zu erregen, wenn eine Würfelfläche parellel zur Oberfläche des Blechs und die Würfelkanten parallel und unter 90° in Richtung des größeren Feldes verlaufen (Würfelflächentextur). Materialien mit Würfelflächentextur haben ausgeprägte rechteckige Hysteresisschleifen. Die so beschriebenen und behandelten Bleche werden, wie bereits erwähnt, als Texturbleche bezeichnet. Selbstverständlich ist es auch möglich, die Statorteilelemente 21.1 und 21.2 aus anders hergestellten und behandelten Materialien aufzubauen.

Die aus einzelen Texturblechen geringer Stärke geschichteten Statorteilelemente 21.1 und 21.2 werden mit Stiftausnehmungen 33.1', 33.2', 33.3' und 33.4' bzw. Fasen 21.1.1, 21.1.2, 21.2.1 bzw. 21.2.2 versehen. Die so vorbereiteten Blechpakete der Statorteilelemente 21.1 und 21.2 werden in ein Gefäßelement 23 mit einem wesentlichen zylindrisch ausgebildeten Wandteil 23' und einem Bodenelement 23" eingebracht. Das Bodenelement 23" weist in seiner Mitte eine Erhöhung auf, die in etwa dem äußeren Umfang der sich gegenüberliegenden Statorelemente 21.1 und 21.2 entspricht. Dabei ist es möglich, daß z. B. in dem erhöhten Teil des Bodenelements 23" entsprechende Vertiefungen vorgesehen sind, die denen der Stiftausnehmungen 31.1', ... entsprechen. Die aufliegenden Statorteilelemente 21.1 und 21.2 werden mit einer Verspannungseinheit 33 derart versehen, daß eine Verspannplatte 33.0 beide Statorteilelemente 21.1 und 21.2 überdeckt und durch die Stiftausnehmungen 31.1, ... Verspannungsstiftelemente 33.1, 33.2, 33.4 hindurch eingebracht werden, die sich im Bodenelement 23" in den bereits beschriebenen Ausnehmungen verankern können. Hierdurch wird erreicht, daß zum einen die Statorteilelemente 21.1 und 21.2 sicher gehalten und die einzelen Texturbleche nur mit einem solchen Druck zusammengehalten werden, die zu keiner Erhöhung der Verluste und damit zu einer Verfälschung der Meßergebnisse führen kann. Selbstverständlich ist es auch möglich, die speziell zusammengehaltenen Blechpakete der Statorteilelemente 21.1 und 21.2 mit der Verspannungseinheit 33 und dem Gefäßelement 23, wenigstens aber mit dem Bodenelement 23" oder Teilen davon, in einem Spritzvorgang in Kunststoff auszuformen. Das Gefäßelement 23 weist darüber hinaus an seiner Unterseite Befestigungselemente 23.1, 23.2 und 23.3 in Form von Steckstiften auf, die z. B. zum Verankern in einer Steckplatte 60 verwendet werden können. In das Bodenelement 23" ist darüber hinaus eine Zentralausnehmung 21' eingebracht, die eine im Wesentlichen nutförmige Konfiguration hat.

Wie insbesondere die Figuren 2 und 3 zeigen, haben die Zentralausnehmung 21' und die Abstandsausnehmung 21" eine solche Breite, daß sie in weiten Abschnitten zueinander kompatibel sind. In die Abstandsausnehmung 21" wird ein magnetoelektrisches Bauteil, z.B. ein Hall-Element 22, eingeführt. Darüber hinaus ist es möglich, die Abstandsausnehmung 21" mit einer Vergußmasse auszufüllen, mit dem Vorteil, daß das Hall-Element elastisch gelagert ist. In die darunterliegende Zentralausnehmung 21' läßt sich eine Schaltungseinheit 50 einschieben. Die Schaltungseinheit 50 ist als integrierte Schaltung, z. B. als IC ausgebildet und kann so einfach und leicht in der Zentralausnehmung 21' untergebracht werden. Selbstverständlich ist es auch möglich, die so ausgebildete Schaltungseinheit 50 bis in die Abstandsausnehmung 21" vorzuschieben und gleichzeitig in die Vergußmasse einzubetten. Außerdem ist es möglich, die Vergußmasse auch in die Zentralausnehmung 21' einzubringen und dort in ihr die Schaltungseinheit 50 einzubetten. In beiden Fällen ist auch die Schaltungseinheit 50 elastisch gelagert.

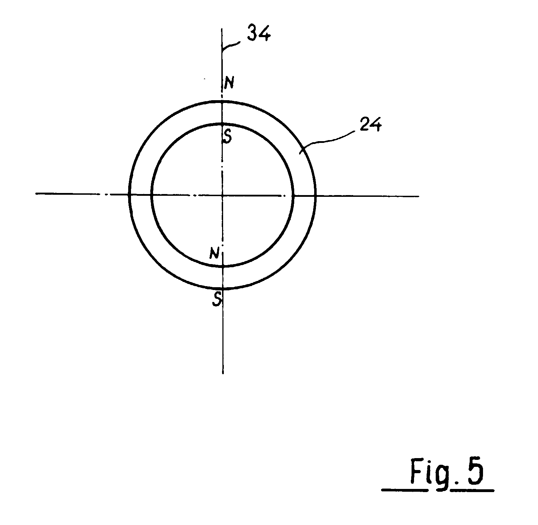

Die gegenüber der so ausgebildeten stationären Einheit 20 rotierende Einheit 20' weist ein Magnetelement 24 auf, daß, wie Figur 5 zeigt, ringförmig ausgebildet ist. Das Magnetelement 24 weist an der senkrecht stehenden Achse 34 eine N-S-Richtung und an der gegenüberliegenden Stelle ebenfalls eine N-S-Richtung auf. Hierdurch kommt es vor allem im Inneren des Ringes 24 zu einem geraden Verlauf des Magnetflusses. Es wird von einer Magnethalterungseinheit 26, 27 gehalten. Die Magnethalterungseinheit besteht aus einem zylinderförmig ausgebildeten Magnethalterungselement 26, in das ein Distanzscheibenelement 27 einführbar und fixierbar ist. Das Distanzscheibenelement 27 ist mit den Drosselklappenwellenelement 12 direkt verbunden. Zwischen dem Distanzscheibenelement 27 und dem Statorelement 21 befindet sich, wenn das Gehäuseelement 23 am Drosselklappengehäuseelement 13 der Drosselklappeneinheit 1 befestigt ist, ein Spalt 28. Zwischen der Zylinderwand 23' und dem Magnethalterungselement 26 liegt ein Spalt 29. Dadurch bilden das Magnethalterungselement 26 und das in ihm gehaltene Magnetelement 24 sowie das Distanzscheibenelement 27 eine Rotoreinheit, die sich geschützt im Inneren des Gehäuseelements 23 bewegen kann. Wird die Verbindung zwischen dem Gehäuseelement 23 und dem Drosselklapen-Gehäuseelement 13 abdichtend gestaltet, übernimmt das Gehäuseelement 23 nicht nur die Funktion einer Halterung, sondern insbesondere die eines äußeren Schutzmantels. Dabei ist es möglich, eine mit der Schaltungseinheit 50 verbundene Anschlußleitung 51 nach außen zu führen. Durch diese Maßnahmen ist der gesamte Drehwinkelsensor 2 gegen äußere Einflüsse, insbesondere die im Motorraum sehr stark belastenden Temperatur- und anderen äußeren Einflüsse wie Staub, Öl, Wasser und dergleichen geschützt.

Besonders vorteilhaft läßt sich der so beschriebene Drehwinkelsensor 2 mit der Drosselklappeneinheit 1 wie folgt montieren:

Auf das aus dem Drosselklappen- Gehäuseelement 13 herausragende Wellenelement 12 wird das Distanzscheibenelement 27 aufgeschoben und entsprechend versplintet. Danach wird das Magnethalterungselement 26 mit dem innen bereits eingebrachten Magnetelement 24 auf das Distanzscheibenelement 27 geschoben. Sind die einzelnen Elemente der rotierenden Einheit 20' entsprechend am Drosselklappenwellenelement 12 justiert und gerichtet, wird das Gefäßelement 23 mit dem erfindungsgemäß gehaltenen Statorelement 21 und dem in der Abstandsausnehmung 21" gehaltenenen Hall-Element 22 und die in der Zentralausnehmung 21' gehaltenene Schaltungseinheit 50 mit der Anschlußleitung 51 über das Magnethalterungselement 26 geschoben. Durch die Verschieb- und Arretierbarkeit der einzelen Teile besteht eine ausgezeichnete Möglichkeit der Justierbarkeit, so daß der Luftspalt 25 und die Spalte 28, 29 sehr genau ausgebildet werden können. Danach wird das Gehäuseelement 23 mit der Zylinderwand 23' am Drosselklappen-Gehäuseelement 13 befestigt. Hierbei ist es möglich, zwischen der Zylinderwand 23' und dem Drosselklappen-Gehäuseelement 13 eine Ringdichtung aus einem elastischen Material oder Metall einzubringen. Durch eine entsprechende Verschraubung ist eine dauerhafte und haltbare Verbindung zwischen der Zylinderwand 23' und dem Drosselklappen-Gehäuseelement 13 gegeben. So ist auf eine sehr einfache Art und Weise ein Drehwinkelsensor 2 herzustellen und zu montieren. Insbesondere die einfache und elegante Halterung des Statorelements 21 am Bodenelement 23" des Gefäßelements 23 ermöglicht die genaue Einjustierung der Einheiten 20 und 20', so daß außer der einfachen Herstellung und Justierbarkeit eine genaue Messung und Meßwertübertragung gegeben ist. Die Meßgenauigkeit wird darüberhinaus durch die Fasen 21.1.1, 21.1.2, 21.2.1 und 21.2.2 an den Statorteilelementen 21.1 und 21.2 erhöht. Schwenkt nämlich das Magnetelement 24 durch eine Lageveränderung des Drosselklappenwellenelementes 12 aus, verdreht sich auch die Achse 34 entsprechend, z.B. um 45°. Bei einem Winkel von 45° durchzieht aber der Magnetfluß senkrecht die Fasen 21.1.1, 21.2.1 oder 21.1.2 oder 21.2.2. Die Halterung des Statorelements 21 mit Hilfe des Verspannungsteils 33 sichert auch dann eine genaue und präzise Halterung, wenn es zu starken Erschütterungen des Drehwinkelsensors kommen kann. Hierdurch wird gewährleistet, daß der Drehwinkelsensor 2 auch unter extremsten Belastungsbedingungen auf Grund seiner speziellen Statorfixierung sicher und genau arbeitet.

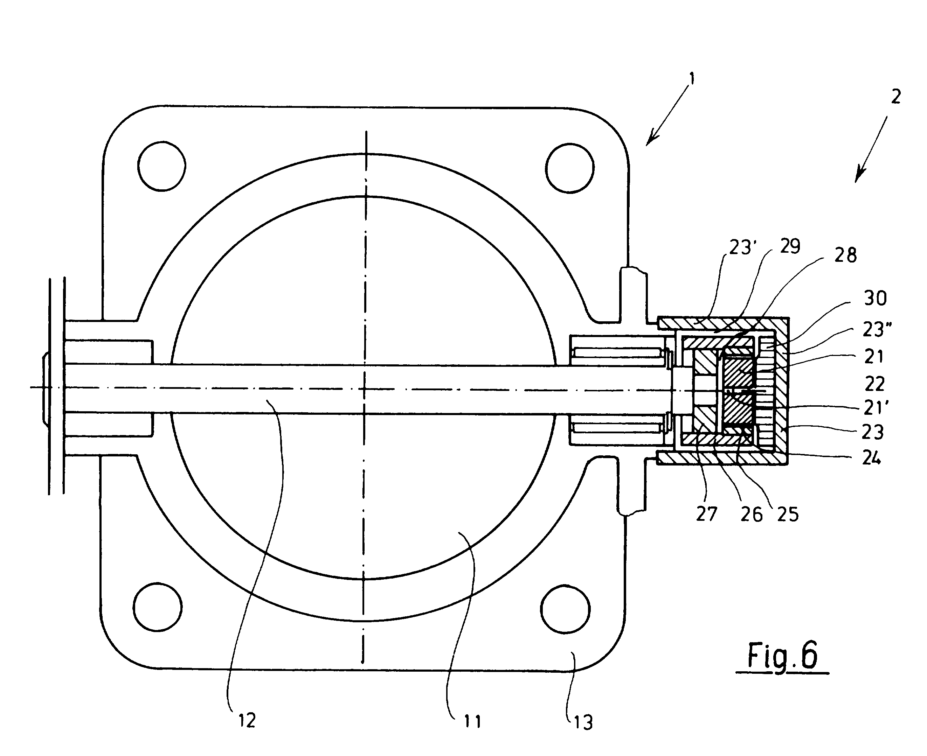

In Figur 6 ist der Erfindungsgegenstand in einem weiteren Längsschnitt schematisch dargestellt.

An die Drosselklappeneinheit 1 ist unmittelbar der Drehwinkelsensor 2 angeordnet.

Der Aufbau der Drosselklappeneinheit 1 und des Drehwinkelsensors 2 entsprechen dem bereits anhand der Figuren 1 bis 5 erläuterten.

In das Gefäßelement 23 wird aber an dessen Boden 23" eine Auswerteschaltungseinheit 30 gehalten. Über der Schaltungseinheit 30 ist das Statorelement 21 mit den Statorteilelementen 21.1 und 21.2 positioniert. Dabei ist es möglich, daß die Statorteilelemente 21.1 und 21.2 kraftschlüssig mit der Schaltungseinheit 30 verbunden ist. Die Schaltungseinheit 30 kann als integrierte Schaltung ausgebildet werden. In sie integriert kann das Hall-Element 22 sein. Selbstverständlich ist es auch möglich, die Statorteilelemente direkt an der Innenseite der Zylinderwand 23' des Sensorgehäuses 23 zu befestigen. In die Abstandsausnehmung 21" ragt das Hall-Element 22, so daß eine direkte Wirkverbindung zwischen beiden besteht. Das hohlzylinderförmig ausgebildete Gehäuseelement 23 ist direkt am Drosselklappen-Gehäuseelement 13 angeordnet. Durch diese Maßnahme sind sämtliche meßempfindlichen Teile des Drehwinkelsensors 2 gegen Einflüsse im Motorraum, die insbesondere durch Temperaturschwankungen, Staub, Öl, Wasser und dergleichen auftreten können, geschützt. Von besonderem Vorteil ist, daß sämtliche Elemente des Drehwinkelsensors 2 eine im wesentlichen zylinderförmige Konfiguration haben und damit den Drehbewegungen des Drosselklappen-Wellenelements 12 sehr vorteilhaft angepaßt sind. Ein weiterer sehr wesentlicher Vorteil ist der, daß die aufgenommenen Meßwerte sofort an Ort und Stelle empfangen und verarbeitet werden. Hierdurch werden meßverfälschende Einflüsse, die insbesondere durch lange Übertragungsleitungen gegeben sind, vermieden.

Besonders vorteilhaft läßt sich die gesamte Einrichtung analag, wie bereits beschrieben, montieren:

Nachdem die Drosselklappeneinheit 1 zusammengesetzt ist, wird auf das aus dem Drosselklappen-Gehäuseelement 13 herausragende Drosselklappenwellenelement 12 das Distanzscheibenelement 27 aufgeschoben und entsprechend arretiert. Danach wird das Magnethalterungselement mit dem innen bereits eingebrachten Magnetelement 24 auf das Distanzscheibenelement 27 geschoben. Bei dem Zusammensetzen der einzelnen Elemente wird insbesondere auf eine genaue Justierung der Magnetelements 24 geachtet.

Parallel dazu kann das Gehäuseelement 23 mit der Schaltungseinheit 30 und dem Statorelement 21 bestückt werden. Dadurch, daß das Hall-Element 22 in die Schaltungseinheit 30 ingetriert ist und aus ihr herausragt, kann dieses genau in der Abstandsausnehmung 21" positioniert werden. Danach wird das Statorelement 21 in das Magnetelement 24 unter Belassung des Luftspaltes 25 geschoben. Zwischen dem Magnethalterungselement 26 und der Innenseite der Zylinderwand 23' des Sensorgehäuses 23 wird der Spalt 29 belassen. Danach wird das Gehäuseelement 23 mit der Zylinderwand 23' am Gehäuseelement 13 in der bereits beschriebenen Art und Weise befestigt. In das Gehäuseelement 23 ist die abdichtbare Zentralausnehmung 21' eingebracht, aus der Anschlußleitungen herausgeführt werden können. Durch diese Anschlußleitungen ist eine Verbindung der Auswerteschaltung und andere Teile des Drehwinkelsensors 2 mit festgelegten Einheiten möglich.

An dieser Stelle sei erwähnt, daß die Steckplatte 60 als Schaltungseinheit 30 ausgebildet werden kann. Dadurch, daß die Schaltungseinheit dann außerhalb des Gehäuseelements 23 liegt, ist sie vielfältigen Einflüssen ausgesetzt. Es muß deshalb im Einzelfall entschieden werden, ob die Montagevorteile die möglichen Beeinträchtigungen der Meßgenauigkeit rechtfertigen. Der Drehwinkelsensor 2 ist nicht nur gegen Einflüsse im Motorraum, wie insbesondere Temperaturschwankungen, Öl, Wasser und dgl., sondern auch gegen elektromagnetische Wellen zu schützen. Aus diesem Grund wird das Gehäuseelement 23 aus einem elektrisch leitfähigen Langfasergranulat mit 1 bis 10 Vol.-% Edelstahlfilamenten geformt. Wesentlich ist, daß die Langfasergranulate Fasergehalte bis zu 60 % Gewichtsprozent und Faserlängen entsprechend der Schnittlänge der extrudierten Stränge, z. B. von 10 mm, aufweist. Hierdurch erreicht das Gehäuseelement 23 eine sehr hohe Steifigkeit und eine sehr hohe Zähigkeit. So beträgt die Zugfestigkeit bis zu 79,35 N/mm² bei einem Zug-E-Modul von bis zu 4830 N/mm². Erreicht werden Biegefestigkeiten bis zu 122,82 N/mm². Die Schlagzähigkeit erreicht Werte bis zu 88,4 J/m. Wesentlich sind darüber hinaus die abschirmenden Eigenschaften, die einen Durchgangswiderstand bis zu 100 Ohm·cm, eine Abschirmung bei 1 GHz bis zu 70 dB und eine elektrostatische Ladung von 0,03 s erreichen. Wird z. B. ein elektrisch leitfähiges Thermoplast mit folgenden Eigenschaften eingesetzt:
- Stahlfaseranteil in Prozent 6
- spezifisches Gewicht in g/cm³ 1,37
- Zugfestigkeit in N/mm² 57,96
- Zug-E-Modul in N/mm² 4830
- Biegefestigkeit in N/mm² 122,82
- Biege-E-Modul in N/mm² 4140
- Schlagzähigkeit IZOD in I/m 10,4
- Durchgangswiderstand in Ohm cm 100
- Abschirmung 1 GHz in dB 45
- elektrostatische Entladung in s 0,04
erreicht man eine Abschirmung > 50 dB in einem Frequenzbereich zwischen 20 MHz bis 1 GHz.

Das Gehäuseelement 23 wird demnach aus einem elektrisch leitfähigen Kunststoff hergestellt, der die positiven Eigenschaften hinsichtlich der Formgebung von Kunststoff mit den positiven Eigenschaften eines Metalls hinsichtlich der elektromagnetischen Abschirmung verbindet.

In das Gehäuseeelement 23 wird z.B. an dessen Boden 23" die Schaltungseinheit 30 gehalten. Die elektrische Isolierung gegenüber dem Gehäuseelement 23 wird entweder durch die Kapselung der Schaltungseinheit 30 gewährleistet oder aber durch eine spezielle Isolierschicht, z. B. aus einem elektrisch isolierenden Kunststoff. Über der Schaltungseinheit 30 bzw. der speziellen Isolierschicht ist das Statorelement 21 positioniert und mit der speziellen Verspannungseinheit 33 aus Kunststoff zu befestigen. Durch die Löcher wird der isolierende Kunststoff gegeben, der sich entweder am Boden 23" oder an der Schaltungseinheit 30 hält und auf der Gegenseite mit der Verspannungsplatte aus isolierendem Kunststoff verbunden sind.

Das hohlzylinderförmig ausgebildete Gehäuseelement 23 ist direkt mit seiner Aktiv- und Anschlußöffnung an dem Drosselklappen-Gehäuseelement 13 angeordnet. Dadurch, daß das Gehäuseelement 23 aus dem elektrisch leitfähigen Thermoplast mit Stahlfilamenten hergestellt ist, werden die elektrisch aktiven d. h. sämtliche meßempfindlichen Teile des Drehwinkelsensors 20 gegen elektromagnetische Einflüsse abgeschirmt. Da das Drosselklappen-Gehäuseelement 13 und das Gehäuseelement 23 aus einem elektrisch leitendem Material bestehen, befinden sich beide auf gleichem Potentialniveau. Möglich ist es natürlich auch, in das Gehäuseelement 23 einen speziellen Masseanschluß einzugießen, an den dann ein spezielles Massekabel angeschlossen werden kann. Erreicht wird durch diese Maßnahmen, daß der Drehwinkelsensor 20 EMV-(ElektroMagnetische Verträglichkeit) gesichert ist. Entsprechend der geforderten Dämpfung wird ein Material eingesetzt, das die gewünschte Abschirmung, die zwischen 45 und 75 dB betragen kann, eingesetzt.

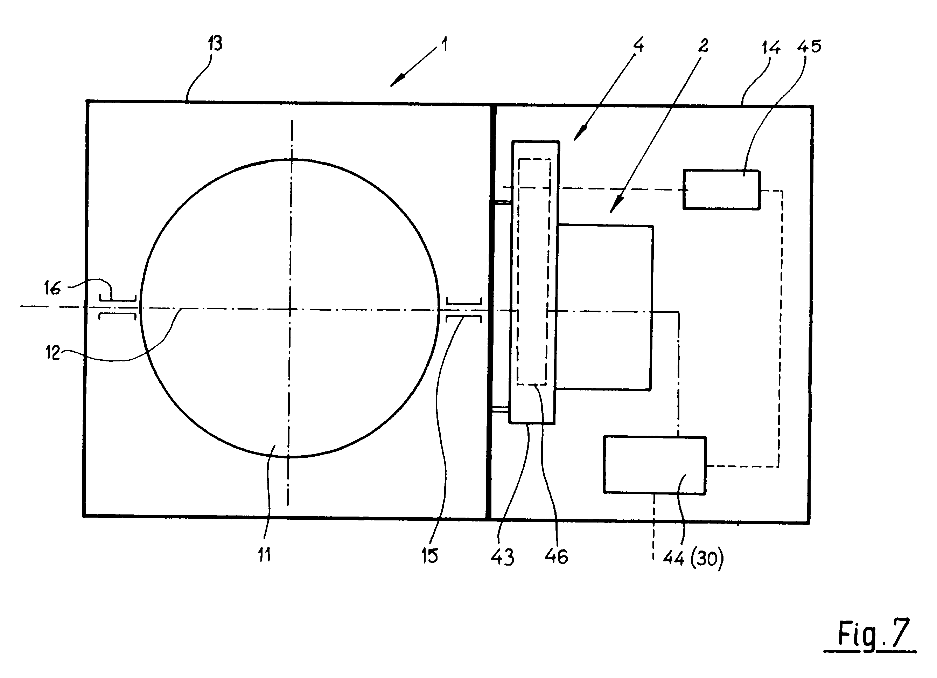

Eine Drosselklappenanordnung gemäß Fig. 7 enthält eine Drosselklappenvorrichtung 1 und eine Drosselklappenstelleinrichtung 4 zusammen.

Die Drosselklappeneinheit 1 umfaßt dabei wenigstens, wie bereits beschrieben, ein Drosselklappenelement 11, das von einemr Drosselklappenwellenelement 12 durchzogen ist, das beidseitig wenigstens in einer Drosselklappenlagerung 15 bzw. 16 gehalten ist. Umgeben ist das Drosselklappenelement 11 von einem Drosselklappengehäuseelement 13. Aus der Stirnseite und der gegenüberliegenden Seite des Drosselklappen-Gehäuseelementes 13 ragt die Drosselklappenwellenelement 12 hinaus.

Die Drosselklappenstelleinrichtung 4 besteht aus einem Drehwinkelsensor 2 und einer Getriebeeinheit 46, die kraftschlüssig mit dem Drosselklappenwellenelement 12 verbunden sind. Die Getriebeeinheit 46 kann von einem Gehäuseelement 43 umgeben sein. Antriebsverbunden ist die Getriebeeinheit mit einer Motoreinheit 45. Steuerungstechnisch ist eine Schaltungseinheit 44 mit dem Drehwinkelsensor 2 und der Motoreinheit 45° verbunden. Über einen dritten Eingang werden die Schaltungseinheit 44 Signale ein- bzw. ausgegeben. Die Schaltungseinheit 44 hat insbesondere die Aufgabe, mittels des Drehwinkelsensors 2 die Stellung des Drosselklappenelements 11 zu erfassen, sie mit einem Sollwert zu vergleichen und bei entsprechender Abweichung von dem Sollwert die Motoreinheit 45° solange anzusteuern, bis über die Getriebeeinheit 46 das Drosselklappenelement 11 in die gewünschte und erforderliche Lage gebracht ist. Diese Einheiten sind von einem Aktuatorgehäuseelement 14 umgeben. Das Aktuatorgehäuseelement 14 hat etwa die gleiche Breite wie das Drosselklappengehäuseelement 13. An den Stirnseiten der Gehäuseelementwe 13 und 14 befinden sich Klemm- und/ oder Steckelemente, mit denen es möglich ist, beide Gehäuseelemente 13 und 14 fest miteinander zu verbinden. Als Klemm- und Steckelemente dienen dabei insbesondere speziell ausgebildete Steckkontaktverbindungen, Nut-Feder-Verbindungen, Rasterverbindungen und dergleichen.

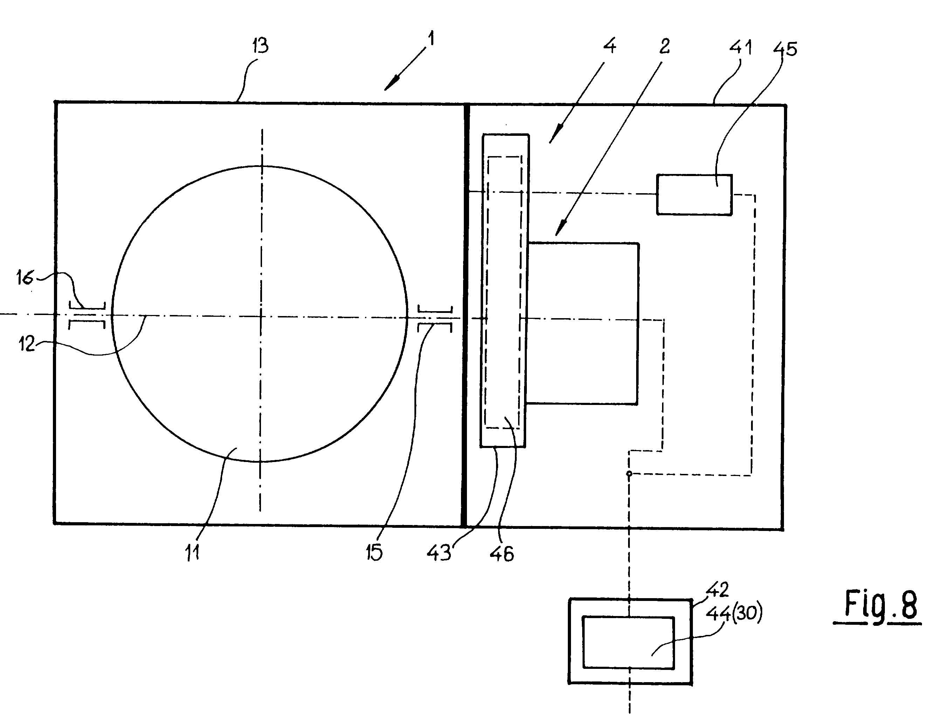

In Fig. 8 ist eine weitere Ausführungsform einer Drosselklappenvorrichtung dargestellt. Sie besteht ebenfalls aus einem Drosselklappeneinheit 1, das ebenfalls von einem Drosselklappen-Gehäuseelement 13 umgeben ist, in dem ein Drosselklappenelement 11 und eine Drosselklappenwellen-Element 12 in Drosselklappenlagerungen 15 und 16 gelagert ist. Der Drehwinkelsensor 2, die Getriebeeinheit 46 und die Motoreinheit 45, die in der bereits beschriebenen Art und Weise miteinander verbunden sind, sind in einem Stelleinrichtungsgehäuse-Element 41 angeordnet. Ein speziell ausgebildetes Elektronikgehäuseelement 42 umfaßt extra eine Schaltungseinheit 44. Der Drehwinkelsensor 2 hat für beide Ausführungsformen in etwa den bereits beschriebenen Aufbau. Das Gehäuseelement 23 braucht dabei nur als Statorhalterungselement aufgebaut sein.

Die Montageweise der Drosselklappenvorrichtung, wie sie sich aus den dargestellten Ausführungsformen ergibt, sei erläutert:

An einem Motor wird ein Drosselklappenelement 11, das von dem Drosselklappengehäuse-Element 13 umgeben ist, montiert. Auf die Seite, aus der das Drosselklappenwellenelement 12 herausragt, wird entweder das Aktuatorgehäuseelement 14 mit der Drosselklappenstelleinrichtung 4 oder das Stelleinrichtungsgehäuse-Element 41 mit der Getriebeeinheit 46, dem Drehwinkelsensor 2 und der Motoreinheit 45 gesteckt. Die Klemm- und/oder Steckelemente sorgen für einen sicheren Halt der Gehäuse-Elemente untereinander. Ein Zusammenstecken des Drosselklappen-Gehäuseelementes 13 mit dem Aktuatorgehäuse-Element 14 wird immer dann vorgenommen, wenn mit einigen wenigen Handgriffen eine komplette Drosselklappenanordnung zusammengefügt werden soll. Ist es allerdings erforderlich, eine Drosselklappenanordnung z. B. unter besonders extremen Bedingungen arbeiten zu lassen, ist die zweite Variante, d. h. eine Verbindung des Drosselklappengehäuse-Elementes 13 mit dem Stelleinrichtungsgehäuse-Element 41 angebracht. Hierbei ist es möglich, das Elektronikgehäuse-Element 42 mit der Schaltungseinheit 44 an einer solchen Stelle unterzubringen, wo nicht so hohe Belastungen, sei es thermischer, mechanischer oder anderer Art herrschen. Hierdurch ergibt sich der besondere Vorteil, daß für extreme Einsatzfälle normale Elektronikbausteine verwendet werden können. Ist es erforderlich, kann das Elektronikgehäuse-Element 42 auf das Stelleinrichtungsgehäuse-Element 41 mit ebenso ausgebildeten Klemmund/oder Steckverbindungselementen aufgesetzt werden. Durch die Unterteilung in rein mechanische, in stellende und steuernde Einheiten ist es damit möglich, Drosselklappenelemente unterschiedlichster Hersteller mit Stelleinrichtungen und Steuereinrichtungen zu kombinieren, einfach zu montieren, zu demontieren bzw. zu reparieren.

Um die elektrisch aktiven Bauteile vor elektromagnetischen Einflüssen zu schützen, kann das Aktuatorgehäuse-element 14, das Stelleinrichtungsgehäuseelement 41 und das Elektronikgehäuse-Element 42 aus dem bereits beschriebenen elektrisch leitfähigen Langfasergranulat mit 1 bis 10 Vol.-% in der bereits beschriebenen Art und Weise hergestellt werden.

## Patentansprüche

1. Verstellvorrichtung, die aufweist
- ein Wellenelement (12), das in einem Gehäuseelement (13,23;13,14;13,41) einer Einheit (1) verstellbar angeordnet ist,
wobei das Gehäuseelement in wenigstens zwei separate Teilgehäuse (13,14,23,41) unterteilt ist, sowie
- einen Drehwinkelsensor (2), der in wenigstens einem Teilgehäuse (14,23,41) aus elektrisch leitfähigen Kunststoff untergebracht ist, bestehend aus
-
. einer stationären Formation (20), die ein Statorelement (21) enthält,
. wobei das Statorelement (21) aus zwei abgerundeten, halbmondförmigen Statorteilelementen (21.1, 21.2) besteht, die mit einer Verspanneinheit (33) gehalten und in einem Statorhalterungselement (23) angeordnet sind,
. wobei sich zwischen den Statorteilelementen (21.1, 21.2) eine Abstandsausnehmung (21") befindet und
. wobei die Statorteilelemente (21.1, 21.2) an den Ecken mit wenigstens einer um 45° geneigten Fase (21.1.1, 21.1.2, 21.2.1, 21.2.2) versehen sind, und
-
. einer rotierenden Formation (20'), die gegenüber der stationären Formation (20) bewegbar ist,
. wobei die rotierende Formation (20') ein ringförmig ausgebildetes Magnetelement (24) ist, das von einer Magnethalterungseinheit (26,27) gehalten ist, die mit dem Wellenelement (12) verbunden ist,
. so daß das Magnetelement (24) unter Belassung eines Luftspaltes (25) um die Statorteilelemente (21.1, 21.2) bewegbar ist.

2. Vorrichtung nach Anspruch 1, dadurch gekennzeichnet, daß die Verspanneinheit (33) aus einer im wesentlichen kreisförmigen Verspannplatte (33.0) und wenigstens einem Verspannungsstiftelement ( 33.1, 33.2, 33.3, 33.4,) je Statorteilelement (21.1, 21.2) besteht, wobei die Verspannplatte (33.0) auf dem Statorelement (21) aufliegt und mit den durch wenigstens eine Stiftausnehmung (33.1', 33.2', 33.3', 33.4') der Statorteilelemente (21.1, 21.2) hindurchgehenden Verspannungsstiftelementen (33.1, 33.2, 33.3, 33.4) an einem Bodenteil (23") des Statorhalterungselements (23) festgehalten ist.

3. Vorrichtung nach Anspruch 2, dadurch gekennzeichnet, daß die Verspannplatte (33.0) und die Verspannungsstiftelemente (33.1, 33.2, 33.3, 33.4) mit ihrer Verbindung am Bodenteil (23") aus einem thermoplastischen Kunststoff hergestellt, vorzugsweise gespritzt sind.

4. Vorrichtung nach einem der Ansprüche 1 bis 3, dadurch gekennzeichnet, daß in der Abstandsausnehmung (21") zwischen den Statorteilelementen (21.1, 21.2) ein magnetoelektrisches Bauteil, z.B. ein Hall-Element (22), angeordnet ist, wobei vorzugsweise in die Abstandausnehmung (21") eine Vergußmasse eingebracht ist, in der das magnetoelektrische Bauteil gehalten ist.

5. Vorrichtung nach einem der Ansprüche 1 bis 4, dadurch gekennzeichnet, daß die Magnethalterungseinheit aus einem zylinderförmig ausgebildeten Magnethalterungselement (26) und einem mit dem Wellenelement (12) verbundenen Distanzscheibenelement (27) besteht.

6. Vorrichtung nach Anspruch 5, dadurch gekennzeichnet, daß das ringförmig ausgebildete Magnetelement (24) eine solche im wesentlichen hohlzylindrische Form hat, so daß es in das Magnethalterungselement (26) einführbar und in ihm festsetzbar ist.

7. Vorrichtung nach einem der Ansprüche 1 bis 6, dadurch gekennzeichnet, daß im Statorhalterungselement (23) gegenüber der Abstandsausnehmung (21") eine Zentralausnehmung (21') eingebracht ist.

8. Vorrichtung nach einem der Ansprüche 1 bis 7, dadurch gekennzeichnet, daß eine am Statorhalterungselement (23) angeordnete Steckplatte (60) als eine Schaltungseinheit (30) ausgebildet ist.

9. Vorrichtung nach einem der Ansprüche 1 bis 8, dadurch gekennzeichnet,
- daß ein Drosselklappenelement (11) und ein mit ihm verbundenes, als Wellenelement ausgebildetes Drosselklappenwellenelement (12) einer als Drosselklappeneinheit (1) ausgebildeten Einheit von einem Drosselklappengehäuseelement (13) als dem ersten Teilgehäuse umgeben sind, aus dem das Drosselklappenwellenelement (12) herausragt,
- daß die zu dem Drehwinkelsensor (2) gehörenden Teile Statorlement (21), gehalten in dem Statorhalterungselement (23), ringförmig ausgebildetes Magnetelement (24), gehalten von dem Magnethalterungselement (26) und einem mit ihm verbundenen Distanzscheibenelement (27), eine Getriebeeinheit (46), eine Schaltungseinheit (44) und eine Motoreinheit(45) in wenigstens einem weiteren Teilgehäuse (14, 41, 42) untergebracht sind und
- daß bei aufgesetztem zweitem Teilgehäuse (14; 41), welches wenigstens den Drehwinkelsensor (2) und die Getriebeeinheit (46) umfaßt, auf das Drosselklappengehäuse-element (13) das aus ihm herausragende Drosselklappenwellenelement (12) in die Getriebeeinheit (46) und das Distanzscheibenelement (27) des Drehwinkelsensors (2) eingreift und eine kraftschlüssige Verbindung herstellbar ist.

10. Vorrichtung nach Anspruch 9, dadurch gekennzeichnet, daß der Drehwinkelsensor (2), die Getriebeeinheit (46), die Schaltungseinheit (44) und die Motoreinheit (45) zu einer Drosselklappenstelleinrichtung zusammengefaßt sind, die von einem Aktuatorgehäuseelement (14) als dem zweiten Teilgehäuse umgeben ist.

11. Vorrichtung nach Anspruch 9, dadurch gekennzeichnet, daß
- der Drehwinkelsensor (2), die Getriebeeinheit (46) und die Motoreinheit (45) von einem Stelleinrichtungsgehäuseelement (41) als dem zweiten und
- die Schaltungseinheit (44) von einem Elektronikgehäuse-element (42) als dem dritten Teilgehäuse umgeben ist.

12. Vorrichtung nach einem der Ansprüche 10 bis 12, dadurch gekennzeichnet, daß
- das Drosselklappengehäuseelement (13) und das Aktuatorgehäuseelement (14) oder
- das Drosselkappengehäuseelement (13) und das Stelleinrichtungsgehäuseelement (41) und gegebenenfalls das Elektronik-gehäuseelement (42) durch Steck- und/oder Klemmittel miteinander verbunden sind.

13. Vorrichtung nach einem der Ansprüche 1 bis 12, dadurch gekennzeichnet, daß das Statorhalterungselement als ein an einer Seite offenes, hohlzylindrisches Gefäßelement (23) ausgebildet ist und an der offenen Seite mit seiner Zylinderwand ( 23') mit einem Teilgehäuseelement (13) oder einem in einem Teilgehäuseelement (41) untergebrachten Getriebegehäuseelement (43) verbunden ist.

14. Vorrichtung nach einem der Ansprüche 1 bis 13, dadurch gekennzeichnet, daß das Statorhalterungselement (23) unter Einbringung der Zentralausnehmung (21'), das Aktuatorgehäuseelement (41) und/oder das Elektronikgehäuseelement (42) unter Integration weiterer elektrischer und mechanischer Durchführungs- und Halterungsöffnungen aus einem hochfesten und temperaturbeständigen Kunststoff und/oder dem elektrisch leitfähigen thermoplastischen Kunststoff hergestellt sind.

15. Vorrichtung nach Anspruch 14, dadurch gekennzeichnet, daß der elektrisch leitfähige thermoplastische Kunststoff ein elektrisch leitfähiges Langfasergranulat mit einem Stahlfaseranteil von 1 bis 10 Gew.-% ist.

## Claims

1. An adjusting device comprising:
- a shaft element (12) disposed adjustably in a housing element (13, 23; 13, 14; 13, 41) of a unit (1),
wherein the housing element is divided into at least two separate part housings (13, 14, 23, 41), and a selsyn (2) disposed in at least one part housing (14, 23, 41) of electrically conductive plastic, consisting of
-
. a stationary formation (20), containing a stator element (21),
. wherein the stator element (21) consists of two rounded-off half-moon shaped stator part elements (21.1, 21.2) held by a clamping unit (33) and disposed in a stator mounting element (23),
. wherein a spacer recess (21") is provided between the stator part elements (21.1, 21.2) and
. wherein the stator part elements (21.1, 21.2) are provided at the corners with at least one 45°-inclination chamfer (21.1.1, 21.1.2, 21.2.1, 21.2.2) and
-
. a rotating formation (20') movable relatively to the stationary formation (20),
. wherein the rotating formation (20') is a magnet element (24) of annular construction which is held by a magnet mounting unit (26, 27) connected to the shaft element (12),
. so that the magnet element (24) is movable around the stator part elements (21.1, 21.2) with an air gap (25) being left free.

2. A device according to claim 1, characterised in that the clamping unit (33) consists of a substantially circular clamping plate (33.0) and at least one clamping pin element (33.1, 33.2, 33.3, 33.4) per stator part element (21.1, 21.2), the clamping plate 33.0) resting on the stator element (21) and being fixed on a base part (23") of the stator mounting element (23) by clamping pin elements (33.1, 33.2, 33.3, 33.4) which extend through the at least one pin recess (33.1', 33.2', 33.3', 33.4') of the stator part elements (21.1, 21.2).

3. A device according to claim 2, characterised in that the clamping plate (33.0) and the clamping pin elements (33.1, 33.2, 33.3, 33.4) with their connection to the base part (23") are made, preferably injection moulded, from a thermoplastic.

4. A device according to any one of claims 1 to 3, characterised in that a magnetoelectric component, e.g. a Hall element (22), is disposed in the spacer recess (21") between the stator part elements (21.1, 21.2), a sealing compound in which the magnetoelectric component is held preferably being introduced into the spacer recess (21").

5. A device according to any one of claims 1 to 4, characterised in that the magnet mounting unit consists of a cylindrical magnet mounting element (26) and a spacer disc element (27) connected to the shaft element (12).

6. A device according to claim 5, characterised in that the annular magnet element (24) has a substantially hollow cylindrical shape such that it can be introduced into and fixed in the magnet mounting element (26) .

7. A device according to any one of claims 1 to 6, characterised in that a central recess (21') is provided in the stator mounting element (23) opposite the spacer recess (21").

8. A device according to any one of claims 1 to 7, characterised in that a plug board (60) disposed on the stator mounting element (23) is constructed as a circuit unit (30).

9. A device according to any one of claims 1 to 8, characterised in that
- a throttle valve element (11) and a throttle valve shaft element (12) connected thereto and constructed as a shaft element and forming part of a unit constructed as a throttle valve unit (1) are surrounded by a throttle valve housing element (13) as the first part housing from which the throttle valve shaft element (12) projects,
- in that the parts belonging to the selsyn (2): stator element (21), held in the stator mounting element (23), annular magnet element (24) held by the magnet mounting element (26), and a spacer disc element (27) connected thereto, a transmission unit (46), a circuit unit (44) and a motor unit (45) are accommodated in at least one further part housing (40, 41, 42) and
- in that when the second part housing (14; 41) comprising at least the selsyn (2) and the transmission unit (46) has been fitted on the throttle valve housing element (13), the throttle valve shaft element (12) projecting therefrom engages in the transmission unit (46) and the spacer disc element (27) of the selsyn (2) and an operative connection can be established.

10. A device according to claim 9, characterised in that the selsyn (2), the transmission unit (46), the circuit unit (44) and the motor unit (45) are combined to form a throttle valve actuating device which is surrounded by an actuator housing element (14) as the second part housing.

11. A device according to claim 9, characterised in that
- the selsyn (2), transmission unit (46) and motor unit (45) are surrounded by an actuating device housing element (41) as the second part housing and
- the circuit unit (44) is surrounded by an electronics housing element (42) as the third part housing.

12. A device according to any one of claims 10 to 12, characterised in that
- the throttle valve housing element (13) and the actuator housing element (14) or
- the throttle valve housing element (13) and the actuating device housing element (41) and if required the electronics housing (42) are interconnected by plug and/or clamping means.

13. A device according to any one of claims 1 to 12, characterised in that the stator mounting element is constructed as a hollow cylindrical vessel element (23) open on one side and is connected on the open side by its cylinder wall (23') to a part housing element (13) or a transmission housing element (43) accommodated in a part housing element (41).

14. A device according to any one of claims 1 to 13, characterised in that the stator mounting element (23) with the provision of the central recess (21'), the actuator housing element (41) and/or the electronics housing element (42) are made, with the integration of further electrical and mechanical lead-through and mounting openings, from a high-strength and temperature-resistant plastic and/or the electrically conductive thermoplastic.

15. A device according to claim 14, characterised in that the electrically conductive thermoplastic is an electrically conductive long-fibre granulate having a steel fibre content of 1 to 10% by weight.

## Revendications

1. Système de réglage qui comporte
- un élément d'arbre (12) qui est agencé de façon réglable dans un élément de carter (13, 23; 13, 14; 13, 41) d'une unité (1),
l'élément de carter étant divisé en au moins deux carters partiels séparés (13, 14, 23, 41)
- ainsi qu'un capteur (2) d'angle de rotation qui est logé dans au moins un carter partiel (14, 23, 41) en matière plastique électriquement conductrice, se composant :
-
. d'une formation stationnaire (20), qui contient un élément de stator (21)
. l'élément de stator (21) se composant de deux éléments partiels de stator en forme de demi-lunes arrondies (21.1, 21.2) qui sont maintenus au moyen d'une unité de déformation (33) et qui sont agencés dans un élément de support (23) de stator;
. un évidement d'écartement (21") se trouvant entre les éléments partiels (21.1, 21.2) de stator et
. les éléments partiels (21.1, 21.2) de stator étant pourvus, aux coins, d'au moins un biseau (21.1.1, 21.1.2, 21.2.1, 21.2.2), incliné de 45°, et
-
. d'une formation tournante (20') qui est mobile par rapport à la formation stationnaire (20),
. la formation tournante (20') étant un élément magnétique (24) de configuration annulaire qui est tenu par une unité de support (26, 27) d'aimant qui est reliée à l'élément d'arbre (12),
. d'une manière telle que l'élément magnétique (24) est mobile autour des éléments partiels (21.1, 21.2) de stator en ménageant un entrefer (25).

2. Système selon la revendication 1, caractérisé en ce que l'unité de déformation (33) se compose d'une plaque de déformation sensiblement circulaire (33.0) et d'au moins un élément de broche (33.1, 33.2, 33.3, 33.4) de déformation pour chaque élément partiel (22.1, 22.2) de stator, la plaque de déformation (33.0) reposant sur l'élément de stator (21) et étant fixée à une partie de base (23") de l'élément de support (23) de stator au moyen des éléments de broches (33.1, 33.2, 33.3, 33.4) de déformation qui traversent au moins un évidement (33.1', 33.2', 33.3', 33.4') de broche des éléments partiels (21.1, 21.2) de stator.

3. Système selon la revendication 2, caractérisé en ce que la plaque de déformation (33.0), et les éléments de broches (33.1, 33.2, 33.3, 33.4) de déformation y compris leur liaison à la partie de base (23"), sont fabriqués en une matière thermoplastique, de préférence par injection.

4. Dispositif selon l'une des revendications 1 à 3, caractérisé en ce qu'un composant magnéto-électrique, par exemple un élément de Hall (22), est agencé dans l'évidement d'écartement (21") entre les éléments partiels (21.1, 21.2) de stator, une masse isolante dans laquelle l'élément magnétoélectrique est tenu étant de préférence introduite dans l'évidement d'écartement (21").

5. Système selon l'une des revendications 1 à 4, caractérisé en ce que l'unité de support d'aimant se compose d'un élément de support (26) d'aimant de configuration cylindrique et d'un élément d'entretoise (27) relié à l'élément d'arbre (12).

6. Système selon la revendication 5, caractérisé en ce que l'élément magnétique (24) de configuration annulaire est sensiblement en forme de cylindre creux de façon à pouvoir être introduit et fixé dans l'élément de support (26) d'aimant.

7. Système selon l'une des revendications 1 à 6, caractérisé en ce qu'un évidement central (21') est ménagé dans l'élément de support (23) de stator face à l'évidement d'écartement (21").

8. Système selon l'une des revendications 1 à 7, caractérisé en ce qu'une plaque embrochable (60) agencée sur l'élément de support (23) de stator est configurée sous la forme d'une unité de circuit (30).

9. Système selon l'une des revendications 1 à 8, caractérisé
en ce qu'un élément de volet d'étranglement (11) et un élément d'arbre (12) de volet d'étranglement, qui est relié au précédent et est configuré comme élément d'arbre, d'une unité configurée comme unité de volet d'étranglement (1), sont entourés par un élément de carter (13) de volet d'étranglement qui constitue le premier carter partiel à partir duquel l'élément d'arbre (12) de volet d'étranglement fait saillie,
en ce que les parties qui appartiennent au capteur (2) d'angle de rotation, c'est-à-dire l'élément de stator (21), tenu dans l'élément de support (23) de stator, l'élément magnétique (24) de configuration annulaire, tenu par l'élément de support (26) d'aimant et un élément d'entretoise (27) qui lui est relié, une unité de jeu d'engrenages (46), une unité de circuit (44) et une unité de moteur (45) sont logés dans au moins un autre carter partiel (14, 41, 42) et
en ce que, lorsque le deuxième carter partiel (14, 41) qui contient au moins le capteur (2) d'angle de rotation et l'unité (46) de jeu d'engrenages est placé sur l'élément de carter (13) de volet d'étranglement, l'élément d'arbre (12) de volet d'étranglement qui en fait saillie pénètre dans l'unité de jeu d'engrenages (46) et l'élément d'entretoise (27) du capteur (2) d'angle de rotation et une liaison par effet de force peut être réalisée.

10. Système selon la revendication 9, caractérisé en ce que le capteur (2) de vitesse de rotation, l'unité (46) de jeu d'engrenages, l'unité (44) de circuit et l'unité (45) de moteur sont assemblés en un dispositif de réglage de volet d'étranglement qui est entouré par l'élément de carter (14) d'actionneur qui constitue le deuxième carter partiel.

11. Système selon la revendication 9, caractérisé en ce que
- le capteur (2) de vitesse de rotation, l'unité (46) de jeu d'engrenages et l'unité (45) de moteur sont entourés par un élément de carter (41) de dispositif de réglage qui constitue le deuxième carter partiel et
- l'unité (44) de circuit est entourée par un élément de carter (42) d'électronique qui constitue le troisième carter partiel.

12. Système selon l'une des revendications 10 à 11, caractérisé en ce que
- l'élément de carter (13) de volet d'étranglement et l'élément de carter (14) d'actionneur, ou
l'élément de carter (13) de volet d'étranglement et l'élément de carter (41) de dispositif de réglage et éventuellement l'élément de carter (42) d'électronique sont reliés entre eux par des moyens de fiches ou des moyens de pinces.

13. Système selon l'une des revendications 1 à 12, caractérisé en ce que l'élément de support de stator est réalisé sous forme d'un élément en forme de récipient cylindrique creux (23) ouvert sur un côté et en ce qu'il est relié au côté ouvert, par sa paroi cylindrique (23'), à un élément de carter partiel (13) ou à un élément de carter (43) de jeu d'engrenages logé dans un élément de carter partiel (41).

14. Système selon l'une des revendications 1 à 13, caractérisé en ce que l'élément de support (23) de stator où est ménagé l'évidement central (21'), l'élément de carter (41) d'actionneur et/ou l'élément de carter (42) d'électronique, dans lequel sont intégrées d'autres ouvertures de passage et de support électriques et mécaniques, sont fabriqués en une matière plastique à haute résistance mécanique et à haute résistance à la température, et/ou en la matière thermoplastique électriquement conductrice.

15. Système selon la revendication 14, caractérisé en ce que la matière thermoplastique électriquement conductrice est un granulat électriquement conducteur à longues fibres, à teneur en fibres d'acier de 1 à 10% en poids.
